# EUROPÄISCHE PATENTSCHRIFT

(11) **EP 3 123 553 B1**
(45) Veröffentlichungstag und Bekanntmachung des Hinweises auf die Patenterteilung: **16.05.2018**
(21) Anmeldenummer: 15711216.0
(22) Anmeldetag: 23.03.2015
(51) Int. Cl.: H01M 8/242, H01M 8/0258, H01M 8/0276, H01M 8/0284, H01M 8/1018

(54) **ELEKTROCHEMISCHE VORRICHTUNG**
ELECTROCHEMICAL DEVICE
DISPOSITIF ÉLECTROCHIMIQUE

(30) Priorität: 24.03.2014 DE 102014104017
(43) Veröffentlichungstag der Anmeldung: 01.02.2017
(73) Patentinhaber: ElringKlinger AG, 72581 Dettingen (DE)
(72) Erfinder: KRAFT, Jürgen, 72555 Metzingen (DE); STAHL, Peter, 71570 Oppenweiler (DE); GÖTZ, Michael, 72581 Dettingen (DE); MORCOS, Manuel, 72076 Tübingen (DE)
(74) Vertreter: Hoeger, Stellrecht & Partner Patentanwälte mbB
(86) Internationale Anmeldenummer: PCT/EP2015/056062
(87) Internationale Veröffentlichungsnummer: WO 2015/144622

(56) Entgegenhaltungen:
- DE-A1-102005 031 081
- DE-A1-102013 021 469
- JP-A- 2006 128 040
- JP-A- 2006 302 702

## Beschreibung

Die vorliegende Erfindung betrifft eine elektrochemische Vorrichtung, welche Folgendes umfasst:
einen Stapel aus mehreren, längs einer Stapelrichtung aufeinanderfolgenden elektrochemischen Einheiten, die jeweils eine elektrochemisch aktive Membran-Elektrodenanordnung, eine Bipolarplatte und mindestens ein Dichtelement umfassen,
mindestens einen Mediumkanal, der sich längs der Stapelrichtung durch mehrere der elektrochemischen Einheiten hindurch erstreckt,
mindestens ein Strömungsfeld, durch welches ein Medium aus dem Mediumkanal quer zu der Stapelrichtung von dem Mediumkanal zu einem anderen Mediumkanal strömen kann, und
mindestens einen Verbindungskanal, durch welchen das Strömungsfeld und der Mediumkanal in Fluidverbindung miteinander stehen.

Bei bekannten elektrochemischen Vorrichtungen dieser Art wird der von einem Medium, beispielsweise einem Brenngas, einem Oxidationsmittel oder einem Kühlmittel, durchströmte Raum der elektrochemischen Vorrichtung gegenüber Räumen, die im Betrieb der elektrochemischen Vorrichtung mit einem anderen fluiden Medium gefüllt sind, oder gegenüber einem Außenraum der elektrochemischen Vorrichtung durch Dichtelemente abgedichtet, welche über ihre gesamte Dichtungslänge mit im Wesentlichen unverändertem Querschnitt ausgeführt sind.

Im Bereich der Verbindungskanäle zwischen den Mediumkanälen und den Strömungsfeldern der elektrochemischen Vorrichtung werden bei Verwendung von metallischen Bipolarplatten üblicherweise die Dichtelemente in einer senkrecht zu der Stapelrichtung verlaufenden Richtung versetzt zueinander angeordnet, das heißt die Dichtelemente liegen nicht auf der gesamten Dichtungslänge - in der Stapelrichtung gesehen - deckungsgleich. Dieser Versatz der Dichtelemente erschwert eine gleichmäßige Verteilung der Dichtungslasten. Ferner wird aufgrund des bereichsweisen Versatzes zwischen den Dichtelementen die Verwendung einer Rand- oder Verstärkungsfolie am Rand der elektrochemisch aktiven Membran-Elektroden-Anordnung erforderlich, da die gegeneinander versetzten Dichtelemente nicht geeignet sind, einen Rand des elektrochemisch aktiven Bereichs zu definieren. Eine solche Rand- oder Verstärkungsfolie muss in einem zusätzlichen Prozessschritt appliziert werden.

Bei einer weiteren bekannten Ausführungsform wird das Dichtelement auf derjenigen Seite der Bipolarplatte, auf der ein Verbindungskanal zwischen dem Mediumkanal und einem Strömungsfeld angeordnet ist, um den Mediumkanal herumgeführt, und ein den Mediumkanal von einem Strömungsfeld trennendes Dichtelement wird nur auf der anderen Seite der Bipolarplatte angeordnet. In diesem Fall ist aber eine Abstützung oder Verstärkung des Dichtelements erforderlich, zu welchem es kein Gegenstück auf der anderen Seite der Bipolarplatte gibt, was aufwändigere konstruktive Lösungen verlangt. Ferner überlappen auch bei dieser bekannten Ausführungsform die Dichtlinien von in der Stapelrichtung aufeinanderfolgenden Dichtelementen einander nicht mehr vollständig.

Die JP 2006 128040 A offenbart eine elektrochemische Vorrichtung gemäß dem Oberbegriff von Anspruch 1.

Der vorliegenden Erfindung liegt die Aufgabe zugrunde, eine elektrochemische Vorrichtung der vorstehend genannten Art zu schaffen, welche ein Überlappen von in der Stapelrichtung aufeinanderfolgenden Dichtelementen auch im Bereich eines Verbindungskanals ermöglicht und keine aufwändige konstruktive Lösung zur Abstützung oder Verstärkung des Dichtelements erfordert.

Diese Aufgabe wird erfindungsgemäß durch eine elektrochemische Vorrichtung nach Anspruch 1 gelöst.

Der Erfindung liegt somit das Konzept zugrunde, im Bereich der Medienzufuhr und/oder der Medienabfuhr zwischen einem Mediumkanal und einem dem Mediumkanal zugeordneten Strömungsfeld eine höhenangepasste oder höhenprofilierte Dichtungsanordnung, insbesondere mit mindestens einem höhenangepassten oder höhenprofilierten Dichtelement, vorzusehen.

Der Verbindungskanal kann insbesondere durch zwei Teile oder Lagen einer Bipolarplatte begrenzt sein, welche sich in einem Randbereich, der das Strömungsfeld und den Mediumkanal umgibt, berühren.

Dabei können die Teile oder Lagen der Bipolarplatte beispielsweise miteinander verschweißt oder verklebt werden oder auf eine andere Weise dichtend miteinander gefügt werden.

Im Bereich des Verbindungskanals sind die beiden Teile oder Lagen der Bipolarplatte voneinander beabstandet, um eine Fluidverbindung zwischen dem Mediumkanal und dem zugeordneten Strömungsfeld zu schaffen.

Ein Bereich eines Teils oder einer Lage einer Bipolarplatte, der zur Bildung des Verbindungskanals längs der Stapelrichtung von dem anderen Teil beziehungsweise der anderen Lage der Bipolarplatte weg versetzt ist, wird im Folgenden als Anhebung bezeichnet.

Die Höhenunterschiede zwischen der Anhebung und den angrenzenden Bereichen des Teils oder der Lage der Bipolarplatte sind im Bereich des Verbindungskanals so klein, dass das Dichtelement einerseits auch bei einem Versatz, wie er in einem Assemblierungsprozess der elektrochemischen Vorrichtung zu erwarten ist, noch auf das notwendige Maß komprimiert wird, um zuverlässig abzudichten, andererseits aber auch nicht so stark komprimiert wird, dass die Bipolarplatte oder das Dichtelement geschädigt werden.

Es ist davon auszugehen, dass ein Dichtelement mit einer Soll-Dichtspalthöhe im Bereich von einigen Zehntel-Millimetern bis zu ungefähr einem Millimeter auch bei einer maximalen Abweichung des Spaltmaßes von ungefähr 0,05 mm bis zu ungefähr 0,2 mm noch zuverlässig funktioniert, wobei der genaue Wert der erlaubten Abweichung von den Spaltmaßen und den Dichtungswerkstoffen abhängig ist.

Wenn die Steigungen in den Flanken der Anhebungen maximal 45° betragen, wird die zulässige Abweichung des Spaltmaßes bei einer Assembliergenauigkeit beim Stapeln der Komponenten der elektrochemischen Vorrichtung von wenigen Zehntel-Millimetern nicht überschritten.

Vorzugsweise liegen die Steigungen in den Flanken der Anhebungen im Bereich von weniger als 30°, insbesondere im Bereich von weniger als 20°.

Bei der erfindungsgemäßen elektrochemischen Vorrichtung kann eine geschlossene Dichtlinie, welche das Strömungsfeld umgibt, über den Verbindungskanal geführt werden, und die in der Stapelrichtung aufeinanderfolgenden Dichtelemente können über ihre gesamte Dichtungslänge hinweg im Wesentlichen überlappend angeordnet sein.

Die Anhebung der Bipolarplatte im Bereich des Verbindungskanals kann über die konstruktive Auslegung der Bipolarplatte stabilisiert werden.

Insbesondere kann vorgesehen sein, dass die Bipolarplatte hinsichtlich des verwendeten Materials und der Gestaltung der Anhebung so ausgebildet ist, dass die Bipolarplatte im Bereich der Anhebung eine ausreichende Eigenstabilität aufweist, so dass der Verbindungskanal auch beim Verspannen der in der Stapelrichtung aufeinanderfolgenden elektrochemischen Einheiten gegeneinander geöffnet bleibt.

Alternativ oder ergänzend hierzu kann vorgesehen sein, dass die Bipolarplatte im Bereich des Verbindungskanals Abstützbereiche und/oder Abstützelemente aufweist, welche die Anhebung mechanisch stabilisieren.

Alternativ oder ergänzend hierzu kann vorgesehen sein, dass ein Stabilisierungselement zwischen den Bipolarplatten im Bereich des Verbindungskanals angeordnet wird, um die Anhebung mindestens einer Bipolarplatte zu stützen.

Ein solches Stabilisierungselement kann als ein von den Bipolarplatten separates Element hergestellt sein und zwischen die Bipolarplatten eingelegt werden.

Alternativ hierzu kann auch vorgesehen sein, dass das Stabilisierungselement einstückig mit einer der Bipolarplatten ausgebildet ist und durch einen Klappvorgang in den Zwischenraum zwischen den Bipolarplatten eingebracht wird.

Die Dichtfläche, an welcher das Dichtelement im Bereich des Verbindungskanals an einer Bipolarplatte anliegt, kann im Wesentlichen eben sein.

Es ist aber auch möglich, dass diese Dichtfläche Strukturen aufweist. Beispielsweise könnte vorgesehen sein, dass die Dichtfläche gewellt ist.

Wenn die Höhe h (das heißt die Erstreckung längs der Stapelrichtung) der Dichtungsanordnung im fertig montierten Zustand der elektrochemischen Vorrichtung in dem Verbindungskanal-Bereich oder in dem Nachbarbereich jeweils überall gleich groß ist, so entspricht die mittlere Höhe der Dichtungsanordnung in dem betreffenden Bereich dieser konstanten Höhe. Wenn hingegen die Höhe h der Dichtungsanordnung im fertig montierten Zustand der elektrochemischen Vorrichtung in dem Verbindungskanal-Bereich und/oder in dem Nachbarbereich variiert, so entspricht die mittlere Höhe der Dichtungsanordnung in dem betreffenden Bereich einem Mittelwert, der durch Mittelung über die Länge des betreffenden Bereichs hinweg zu ermitteln ist.

Bei einer bevorzugten Ausgestaltung der Erfindung ist vorgesehen, dass zwischen dem Verbindungskanal-Bereich und dem Nachbarbereich ein Übergangsbereich angeordnet ist, in welchem die Höhe der Dichtungsanordnung von dem Nachbarbereich ausgehend zu dem Verbindungskanal-Bereich hin abnimmt.

Das fluide Medium kann insbesondere ein Oxidationsmittel, ein Brenngas oder ein Kühlmittel der elektrochemischen Vorrichtung sein.

Vorzugsweise kann das Medium durch das Strömungsfeld im Wesentlichen senkrecht zu der Stapelrichtung der elektrochemischen Vorrichtung von dem Mediumkanal zu einem anderen Mediumkanal strömen.

Mindestens ein Dichtelement der Dichtungsanordnung steht in dem Verbindungskanal-Bereich und in dem Nachbarbereich mit der Bipolarplatte in Kontakt, wobei der mittlere Abstand H einer diesem Dichtelement zugewandten Außenseite der Bipolarplatte von einer senkrecht zu einer Stapelrichtung ausgerichteten Bezugsebene der Bipolarplatte im Verbindungskanal-Bereich größer ist als im Nachbarbereich.

Die Bezugsebene kann dabei insbesondere eine Zentralebene einer zweilagigen Bipolarplatte sein, längs welcher die beiden Lagen der Bipolarplatte in einem Randbereich der Bipolarplatte und/oder in dem Nachbarbereich der Dichtungsanordnung aneinander anliegen.

Die dem Dichtelement zugewandte Außenseite der Bipolarplatte ist vorzugsweise in einem zwischen dem Verbindungskanal-Bereich und dem Nachbarbereich angeordneten Übergangsbereich gegenüber der Bezugsebene der Bipolarplatte geneigt.

Dabei beträgt der mittlere Neigungswinkel der dem Dichtelement zugewandten Außenseite der Bipolarplatte gegenüber der Bezugsebene in dem Übergangsbereich höchstens ungefähr 45°, insbesondere höchstens ungefähr 30°, besonders bevorzugt höchstens ungefähr 20°.

Ferner ist vorzugsweise vorgesehen, dass die Summe aus der mittleren Höhe h der Dichtungsanordnung und den mittleren Abständen H₁, H₂ der der Bezugsebene der Bipolarplatte abgewandten Außenseiten der Bipolarplatte von der Bezugsebene in dem Verbindungskanal-Bereich (h_{V} + H_{V1} + H_{V2}) und in dem Nachbarbereich (h_{N} + H_{N1} + H_{N2}), besonders bevorzugt auch im Übergangsbereich (h_{U} + H_{U1} + H_{U2}), im Wesentlichen gleich groß ist.

Bei einer bevorzugten Ausgestaltung der Erfindung ist vorgesehen, dass mindestens eine der elektrochemischen Einheiten eine Dichtungsanordnung mit zwei Dichtelementen umfasst, die zusammen einen Abstand zwischen der Bipolarplatte der betreffenden elektrochemischen Einheit und einer Bipolarplatte einer benachbarten elektrochemischen Einheit längs der Stapelrichtung überbrücken.

Dabei kann vorgesehen sein, dass die Dichtelemente derart ausgebildet und angeordnet sind, dass sie - längs der Stapelrichtung gesehen - einander zumindest teilweise überlappen, vorzugsweise über die gesamte Länge der Dichtelemente hinweg.

Besonders günstig ist es, wenn die Dichtelemente derart ausgebildet und angeordnet sind, dass eines der Dichtelemente das andere Dichtelement - längs der Stapelrichtung gesehen - vollständig überlappt, vorzugsweise über die gesamte Länge der Dichtelemente hinweg.

Bei einer bevorzugten Ausgestaltung der Erfindung umfasst die Bipolarplatte zwei Teile oder Lagen, die im Verbindungskanal-Bereich zumindest abschnittsweise voneinander beabstandet sind.

Dabei kann vorgesehen sein, dass der mittlere Abstand H₁, H₂ der der Bezugsebene der Bipolarplatte abgewandten Außenseite der Bipolarplatte von der Bezugsebene der Bipolarplatte bei beiden Teilen oder Lagen der Bipolarplatte in dem Verbindungskanal-Bereich größer ist als in dem Nachbarbereich.

In diesem Fall sind beide Teile oder Lagen der Bipolarplatte im Bereich des Verbindungskanals mit jeweils einer Anhebung versehen. Dabei können diese Anhebungen längs der Stapelrichtung dieselbe Höhe oder voneinander verschiedene Höhen aufweisen.

Ferner kann vorgesehen sein, dass der mittlere Abstand H₁, H₂ der der Bezugsebene der Bipolarplatte abgewandten Außenseite der Bipolarplatte von der Bezugsebene der Bipolarplatte bei einem der Teile oder Lagen der Bipolarplatte in dem Verbindungskanal-Bereich im Wesentlichen gleich groß ist wie in dem Nachbarbereich.

In diesem Fall ist nur eines der Teile oder nur eine der Lagen der Bipolarplatte mit einer Anhebung im Bereich des Verbindungskanals versehen.

Um sicherzustellen, dass der Verbindungskanal auch nach dem Verspannen der elektrochemischen Einheiten der elektrochemischen Vorrichtung gegeneinander geöffnet bleibt, kann vorgesehen sein, dass mindestens einer der Teile oder Lagen der Bipolarplatte mit einem oder mehreren Abstützbereichen versehen ist, mit welchen dieser Teil oder diese Lage der Bipolarplatte sich im Verbindungskanal-Bereich an dem jeweils anderen Teil oder an der jeweils anderen Lage abstützt.

Der Abstützbereich kann beispielsweise in Form eines runden oder länglichen Napfes oder eines Steges ausgebildet sein.

Der Abstützbereich wird vorzugsweise im Wesentlichen vollständig von dem Dichtelement überdeckt.

Der Abstützbereich ist vorzugsweise einstückig mit jeweils einem der abzustützenden Teile oder Lagen ausgebildet.

Um sicherzustellen, dass der Verbindungskanal auch nach dem Verspannen der elektrochemischen Einheiten der elektrochemischen Vorrichtung gegeneinander geöffnet bleibt, kann alternativ oder ergänzend zu solchen Abstützbereichen vorgesehen sein, dass im Zwischenraum zwischen den zwei Teilen oder Lagen der Bipolarplatte mindestens ein Stabilisierungselement angeordnet ist.

Ein solches Stabilisierungselement kann separat von den Teilen oder Lagen der Bipolarplatte hergestellt und in den Zwischenraum zwischen den zwei Teilen oder Lagen der Bipolarplatte eingelegt sein.

Alternativ hierzu kann auch vorgesehen sein, dass das Stabilisierungselement einstückig mit einem der Teile der Bipolarplatte ausgebildet ist.

In diesem Fall kann das Stabilisierungselement insbesondere durch einen Umformvorgang, beispielsweise durch einen Klappvorgang, bei der Montage der Bipolarplatte in den Zwischenraum zwischen den zwei Teilen oder Lagen der Bipolarplatte eingebracht werden.

Das Dichtelement kann grundsätzlich an einem beliebigen anderen Element der das Dichtelement umfassenden elektrochemischen Einheit festgelegt sein.

Beispielsweise kann vorgesehen sein, dass das Dichtelement an der Bipolarplatte festgelegt ist.

Bei einer bevorzugten Ausgestaltung der Erfindung ist jedoch vorgesehen, dass mindestens ein Dichtelement der Dichtungsanordnung an der Membran-Elektrolyt-Anordnung der jeweiligen elektrochemischen Einheit festgelegt ist.

Besonders günstig ist es, wenn mindestens ein Dichtelement an einer Gasdiffusionslage der Membran-Elektrolyt-Anordnung der jeweiligen elektrochemischen Einheit festgelegt ist.

Das Dichtelement kann insbesondere an die Membran-Elektrolyt-Anordnung, insbesondere eine Gasdiffusionslage der Membran-Elektrolyt-Anordnung, angespritzt oder angeklebt sein.

Vorzugsweise umfasst mindestens ein Dichtelement ein Elastomermaterial. Insbesondere kann vorgesehen sein, dass das Dichtelement im Wesentlichen vollständig aus einem Elastomermaterial gebildet ist.

Die Bipolarplatte umfasst vorzugsweise ein metallisches Material und kann insbesondere im Wesentlichen vollständig aus einem metallischen Material gebildet sein.

Die elektrochemisch aktive Membran-Elektroden-Anordnung umfasst vorzugsweise eine Polymerelektrolytmembran (PEM).

Die elektrochemische Vorrichtung kann insbesondere als ein Brennstoffzellenstapel oder ein Elektrolyseur ausgebildet sein.

Bei der erfindungsgemäßen elektrochemischen Vorrichtung wird die Höhe des Dichtelements oder der Dichtelemente der Dichtungsanordnung im Bereich des Verbindungskanals so an den Verlauf der Dichtungsfläche der Bipolarplatte angepasst, dass eine geschlossene Dichtlinie um das Strömungsfeld und/oder den Mediumkanal erzielt wird.

Außerdem können mit einem solchen höhenvariablen Dichtelement oder höhenvariablen Dichtelementen auch die Flanken eines im Bereich des Verbindungskanals angehobenen Bereiches der Bipolarplatte abgedichtet werden.

Dichtelemente auf verschiedenen Seiten einer Bipolarplatte können - in der Stapelrichtung gesehen - im Wesentlichen überlappend, insbesondere im Wesentlichen deckungsgleich, ausgeführt werden.

Durch die Höhenanpassung des Dichtelements oder der Dichtelemente der Dichtungsanordnung ist kein Versatz der Dichtelemente senkrecht zur Stapelrichtung mehr erforderlich.

Das Dichtelement der Dichtungsanordnung kann unmittelbar die elektrochemisch aktive Membran-Elektroden-Anordnung umgeben; es ist insbesondere nicht mehr erforderlich, die Membran-Elektroden-Anordnung mit einem zusätzlichen Verstärkungsrand zu versehen.

Bevorzugt wird mindestens ein Dichtelement an eine Gasdiffusionslage der Membran-Elektroden-Anordnung angespritzt. Dabei wird im Bereich des Verbindungskanals die Höhe des Dichtprofils der Form der Anhebung eines Teils oder einer Lage der Bipolarplatte folgend angepasst.

Alternativ oder ergänzend hierzu können aber auch auf einer oder auf beiden Seiten einer Bipolarplatte als Dichtelemente Flachdichtungen variabler Höhe eingesetzt werden, die bevorzugt mit einem an der Bipolarplatte vorgesehenen Dichtvorsprung, beispielsweise in Form einer Schneide oder einer Kompressionskante, zusammenwirken, um den Dichtspalt abzudichten.

Die Dichtungsanordnung wird vorzugsweise zweiteilig, insbesondere mit einer anodenseitigen Gasdiffusionslage als Träger für ein erstes Dichtelement und einer kathodenseitigen Gasdiffusionslage als Träger für ein zweites Dichtelement, ausgeführt.

Bei einer bevorzugten Ausführungsform umfasst ein Bodenteil die Mediumkanäle, auf deren Umrandung auf beiden Seiten Dichtprofile ausgebildet sind, und die aktive Fläche, in welcher die Strömungsfelder angeordnet sind und auf deren Umrandung nur auf einer Seite ein Teil eines Dichtungsprofils angeordnet ist. Ein Deckelteil umfasst in diesem Fall den zweiten Teil des Dichtungsprofils, welcher ein Strömungsfeld der Bipolarplatte umgibt und somit die zweite Hälfte der Dichtungsanordnung bildet.

Weitere Merkmale und Vorteile der Erfindung sind Gegenstand der nachfolgenden Beschreibung und der zeichnerischen Darstellung von Ausführungsbeispielen.

In den Zeichnungen zeigen:

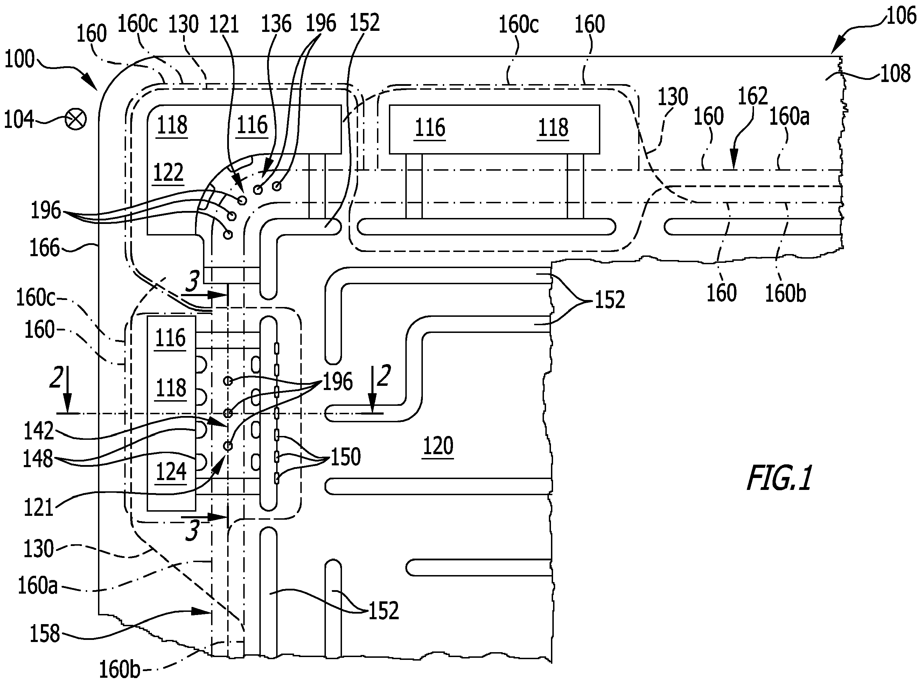

- Fig. 1: eine ausschnittsweise schematische Draufsicht auf eine elektrochemische Einheit einer mehre längs einer Stapelrichtung aufeinanderfolgende elektrochemische Einheiten umfassenden elektrochemischen Vorrichtung, im Bereich einer Brenngaszufuhr und einer Kühlmittelzufuhr;

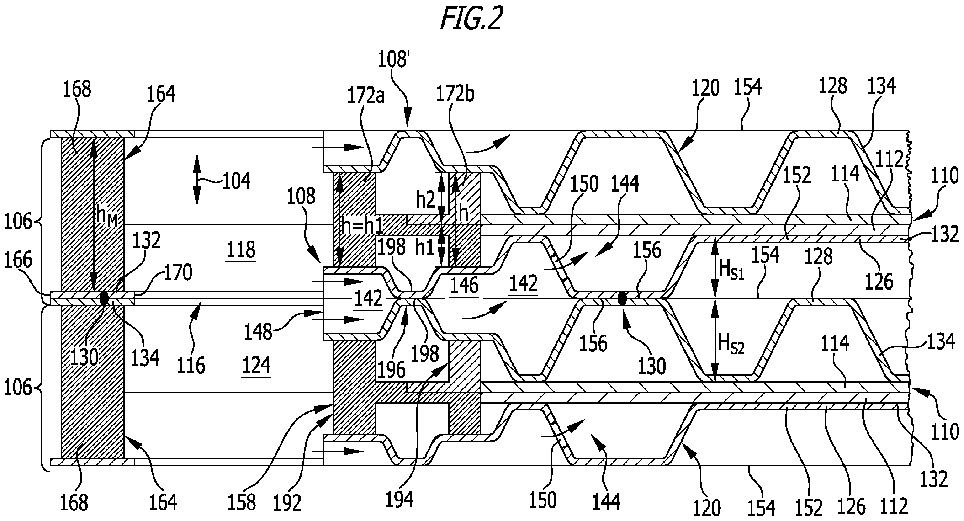

- Fig. 2: einen schematischen Schnitt durch die Brenngaszufuhr der elektrochemischen Einheit aus Fig. 1, längs der Linie 2 - 2 in Fig. 1;

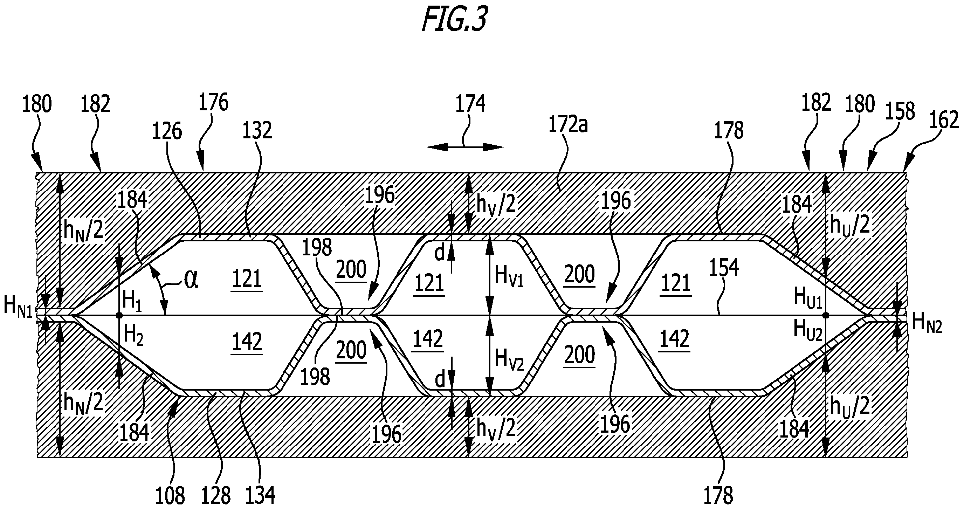

- Fig. 3: einen schematischen Längsschnitt durch eine Dichtungsanordnung der elektrochemischen Einheit aus Fig. 1, längs der Linie 3 - 3 in Fig. 1;

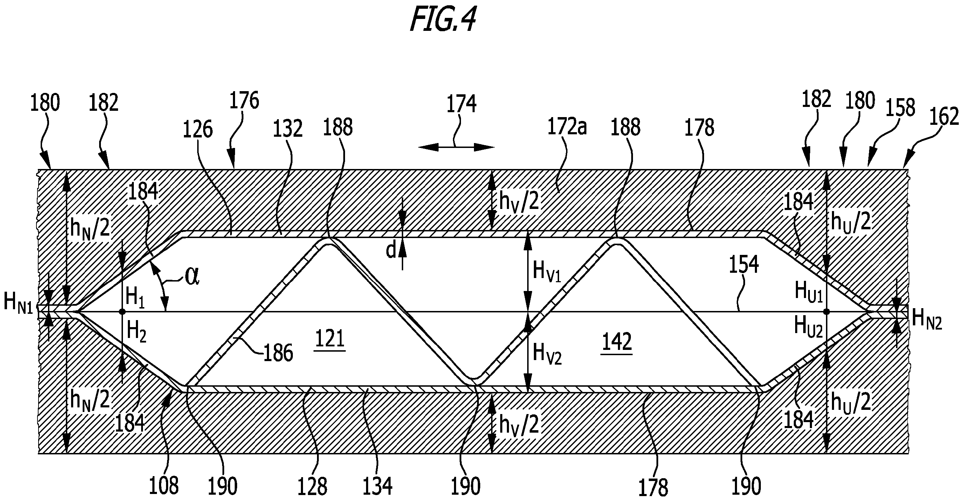

- Fig. 4: einen der Fig. 3 entsprechenden schematischen Längsschnitt durch die Dichtungsanordnung der elektrochemischen Einheit bei einer zweiten Ausführungsform der elektrochemischen Einheit, bei welcher die elektrochemische Einheit eine zweiteilige Bipolarplatte umfasst und im Zwischenraum zwischen den zwei Teilen der Bipolarplatte ein Stabilisierungselement angeordnet ist;

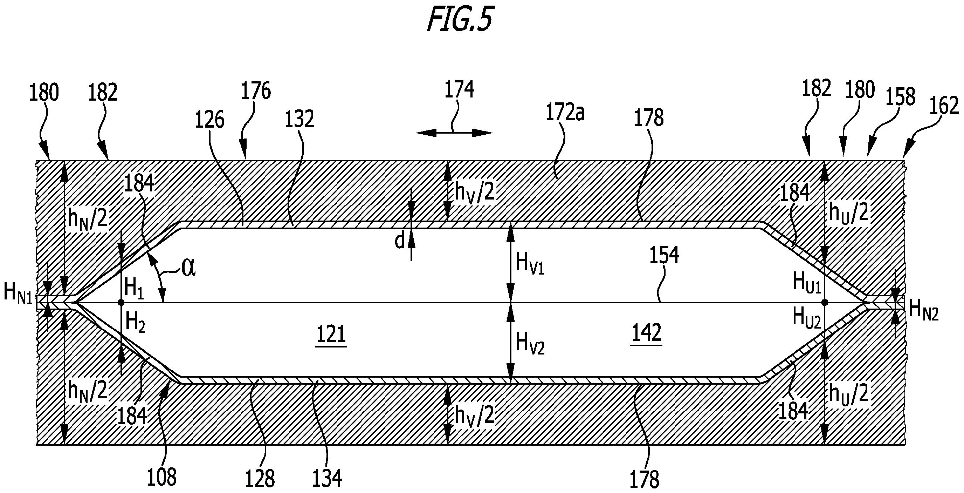

- Fig. 5: einen der Fig. 3 entsprechenden schematischen Längsschnitt durch die Dichtungsanordnung der elektrochemischen Einheit bei einer dritten Ausführungsform der elektrochemischen Einheit, bei welcher die zweiteilige Bipolarplatte in einem Verbindungskanal-Bereich eines Strömungsfeld-Abschnitts der Dichtungsanordnung eine ausreichende Steifigkeit aufweist, so dass auf eine Abstützung durch Abstützbereiche oder ein Stabilisierungselement verzichtet werden kann; und

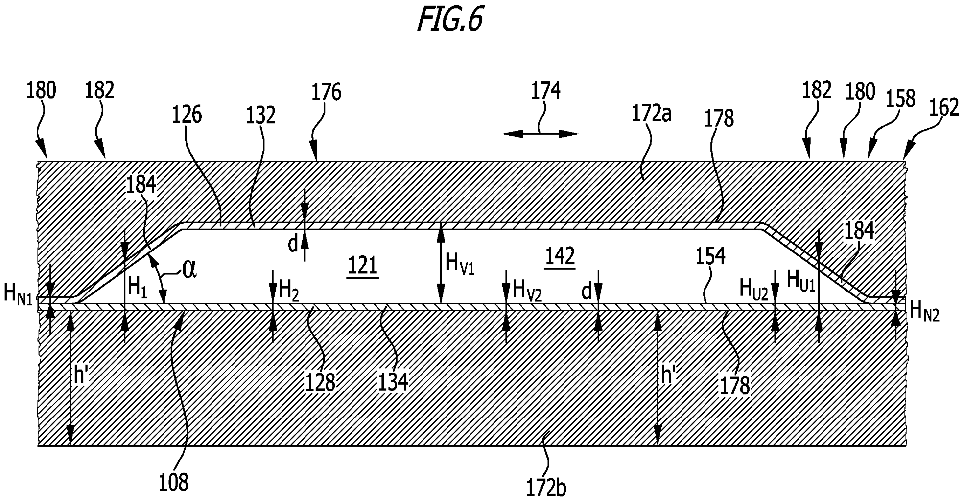

- Fig. 6: einen der Fig. 3 entsprechenden schematischen Längsschnitt durch die Dichtungsanordnung der elektrochemischen Einheit, wobei die elektrochemische Einheit eine zweiteilige Bipolarplatte umfasst und nur eines der Teile der Bipolarplatte in einem Verbindungskanal-Bereich eines Strömungsfeld-Abschnitts der Dichtungsanordnung eine größere Höhe aufweist als in einem in der Längsrichtung des Strömungsfeld-Abschnitts der Dichtungsanordnung vor oder hinter dem Verbindungskanal-Bereich liegenden Nachbarbereich.

Gleiche oder funktional äquivalente Elemente sind in allen Figuren mit denselben Bezugszeichen bezeichnet.

Eine in den Fig. 1 bis 4 dargestellte, als Ganzes mit 100 bezeichnete elektrochemische Vorrichtung, beispielsweise ein Brennstoffzellenstapel oder ein Elektrolyseur, umfasst einen Stapel, der mehrere in einer Stapelrichtung 104 aufeinanderfolgende elektrochemische Einheiten 106, beispielsweise Brennstoffzelleneinheiten oder Elektrolyseeinheiten, und eine (nicht dargestellte) Spannvorrichtung zum Beaufschlagen der elektrochemischen Einheiten mit einer längs der Stapelrichtung 104 gerichteten Spannkraft umfasst.

Wie am besten aus den Fig. 2 und 3 zu ersehen ist, umfasst jede elektrochemische Einheit 106 der elektrochemischen Vorrichtung 100 jeweils eine Bipolarplatte 108 und eine Membran-Elektroden-Anordnung (MEA) 110.

Die Membran-Elektroden-Anordnung 110 umfasst beispielsweise eine katalysatorbeschichtete Membran ("catalyst coated membrane"; CCM) und zwei Gasdiffusionslagen 112 und 114, wobei eine erste Gasdiffusionslage 112 anodenseitig und eine zweite Gasdiffusionslage 114 kathodenseitig angeordnet ist.

Die Bipolarplatte 108 ist beispielsweise aus einem metallischen Material gebildet.

Die Bipolarplatte 108 weist mehrere Medium-Durchtrittsöffnungen 116 auf, durch welche jeweils ein der elektrochemischen Vorrichtung 100 zuzuführendes fluides Medium (im Falle eines Brennstoffzellenstapels beispielsweise ein Brenngas, ein Oxidationsmittel oder ein Kühlmittel) durch die Bipolarplatte 108 hindurchtreten kann.

Die Medium-Durchtrittsöffnungen 116 der im Stapel aufeinanderfolgenden Bipolarplatten 108 und die in der Stapelrichtung 104 zwischen den Medium-Durchtrittsöffnungen 116 liegenden Zwischenräume bilden zusammen jeweils einen Mediumkanal 118.

Jedem Mediumkanal 118, durch welchen ein fluides Medium der elektrochemischen Vorrichtung 100 zuführbar ist, ist jeweils mindestens ein anderer Mediumkanal zugeordnet, durch welchen das betreffende fluide Medium aus der elektrochemischen Vorrichtung 100 abführbar ist.

Durch ein dazwischenliegendes Strömungsfeld 120, welches vorzugsweise an einer Oberfläche einer benachbarten Bipolarplatte 108 oder (beispielsweise im Falle eines Kühlmittel-Strömungsfeldes) im Zwischenraum zwischen den Lagen einer mehrlagigen Bipolarplatte 108 ausgebildet ist, kann das Medium aus dem ersten Mediumkanal 118 quer, vorzugsweise im Wesentlichen senkrecht, zu der Stapelrichtung 104 zu dem zweiten Mediumkanal strömen.

In Fig. 1 ist beispielsweise ein Mediumkanal 122 für ein Kühlmittel der elektrochemischen Vorrichtung 100 und ein Mediumkanal 124 für ein Brenngas der elektrochemischen Vorrichtung 100 dargestellt.

Durch jeweils einen Verbindungskanal 121 steht jeder Mediumkanal 118 in Fluidverbindung mit dem jeweils zugeordneten Strömungsfeld 120.

Jede Bipolarplatte 108 umfasst bei der in den Zeichnungen dargestellten Ausführungsform ein erstes Teil 126 und ein zweites Teil 128, die längs Verbindungslinien 130, welche in Fig. 1 in gebrochenen Linien dargestellt sind, vorzugsweise stoffschlüssig, insbesondere durch Verschweißen, beispielsweise durch Laserschweißung, fluiddicht aneinander festgelegt sind.

Die beiden Teile 126 und 128 der Bipolarplatte 108 können insbesondere als eine erste Lage 132 und eine zweite Lage 134 der Bipolarplatte 108 ausgebildet sein.

Wie aus Fig. 1 zu ersehen ist, steht der Mediumkanal 122 für Kühlmittel über einen Verbindungskanal 136 für Kühlmittel, der durch einen Zwischenraum zwischen dem ersten Teil 126 und einem zweiten Teil 128 der Bipolarplatte 108 ausgebildet ist, in Fluidverbindung mit einem Strömungsfeld für das Kühlmittel, welches im Zwischenraum zwischen dem ersten Teil 126 und dem zweiten Teil der Bipolarplatte 128 ausgebildet ist.

Wie aus Fig. 2 zu ersehen ist, steht der Mediumkanal 124 für Brenngas über einen Verbindungskanal 142 für Brenngas in Fluidverbindung mit einem Strömungsfeld 144 für das Brenngas, welches zwischen dem ersten Teil 126 der Bipolarplatte 108 und der ersten Gasdiffusionslage 112 ausgebildet ist.

Der Verbindungskanal 142 umfasst eine Verbindungskammer 146, die durch einen Zwischenraum zwischen dem ersten Teil 126 und dem zweiten Teil 128 der Bipolarplatte 108 gebildet ist und über dem Mediumkanal 124 für Brenngas zugewandte Eintrittsöffnungen 148 in Fluidverbindung mit dem Mediumkanal 124 und über dem Strömungsfeld 144 für das Brenngas zugewandte Durchtrittsöffnungen 150 in Fluidverbindung mit dem Strömungsfeld 144 steht.

Um die Strömung der Medien durch die jeweils zugeordneten Strömungsfelder zu führen, sind der erste Teil 126 und der zweite Teil 128 der Bipolarplatte 108 im Bereich der Strömungsfelder 120 mit Strömungsleitelementen 152 versehen, welche beispielsweise in Form erhabener Sicken ausgebildet sein können.

Im Bereich der Strömungsleitelemente 152 weisen die Teile 126 beziehungsweise 128 der Bipolarplatte 108 jeweils eine Höhe H_{S1} beziehungsweise H_{S2} auf, gemessen von einer gemeinsamen Bezugsebene 154 der Bipolarplatte 108.

Die Bezugsebene 154 ist senkrecht zur Stapelrichtung 104 ausgerichtet und verläuft durch die Kontaktflächen 156, an denen die beiden Teile 126 und 128 der Bipolarplatte 108 aneinander anliegen.

Die Bezugsebene bildet somit eine Zentralebene der mehrteiligen Bipolarplatte 108.

Ein unerwünschtes Austreten der fluiden Medien aus den Mediumkanälen 118 und den Strömungsfeldern 120 der elektrochemischen Vorrichtung 100 wird durch eine Dichtungsanordnung 158 vermieden, deren Dichtlinien 160 in der Draufsicht von Fig. 1 durch strichpunktierte Linien dargestellt sind.

Die Dichtungsanordnung 158 umfasst einen Strömungsfeld-Abschnitt 162 mit der äußeren Dichtlinie 160a und der inneren Dichtlinie 160b, welche zwischen den Strömungsfeldern 120 einerseits und den Mediumkanälen 118 andererseits verlaufen und die Verbindungskanäle 121 queren, durch welche die Strömungsfelder 120 mit den jeweils zugeordneten Mediumkanälen 118 in Fluidverbindung miteinander stehen.

Ferner umfasst die Dichtungsanordnung 158 Mediumkanal-Abschnitte 164 mit Dichtlinien 160c, welche jeweils einen der Mediumkanäle 118 zumindest abschnittsweise umgeben und den betreffenden Mediumkanal 118 von einem äußeren Rand 166 der Bipolarplatte 108 trennen.

Die Mediumkanal-Abschnitte 164 der Dichtungsanordnung 158 umfassen jeweils ein Dichtelement 168, welches zwischen einer ersten Lage 132 einer Bipolarplatte 108 und einer zweiten Lage 134 einer in der Stapelrichtung 104 benachbarten Bipolarplatte 108' angeordnet ist und sich im Wesentlichen parallel zu einem Rand 170 einer Medium-Durchtrittsöffnung 116 des betreffenden Mediumkanals 118 erstreckt. Im Bereich der Mediumkanal-Abschnitte 164 weisen die Dichtelemente 168 der Dichtungsanordnung 158 eine in ihrer Längsrichtung im Wesentlichen konstante Höhe h_{M} auf.

Der Strömungsfeld-Abschnitt 162 der Dichtungsanordnung 158 umfasst vorzugsweise zwei Dichtelemente 172a und 172b, welche ebenfalls zwischen der ersten Lage 132 der Bipolarplatte 108 und der zweiten Lage 134 der benachbarten Bipolarplatte 108' angeordnet sind.

Dabei ist das erste Dichtelement 172a vorzugsweise an der (beispielsweise anodenseitigen) ersten Gasdiffusionslage 112 festgelegt und das zweite Dichtelement 172b vorzugsweise an der (beispielsweise kathodenseitigen) zweiten Gasdiffusionslage 114 der Membran-Elektroden-Anordnung 110 festgelegt.

Beispielsweise kann vorgesehen sein, dass die Dichtelemente 172a und 172b an die jeweils zugeordnete Gasdiffusionslage 112 beziehungsweise 114 angespritzt oder angegossen sind.

Dabei kann vorgesehen sein, dass das erste Dichtelement 172a beispielsweise im Bereich der äußeren Dichtlinie 160a sowohl an der ersten Lage 132 der Bipolarplatte 108 als auch an der zweiten Lage 134 der benachbarten Bipolarplatte 108' und im Bereich der inneren Dichtlinie 160b an der ersten Lage 132 der Bipolarplatte 108 und an dem zweiten Dichtelement 172b anliegt, während das zweite Dichtelement 172b im Bereich der inneren Dichtlinie 160b an der zweiten Lage der Bipolarplatte 108' und an dem ersten Dichtelement 172a anliegt.

Die Dichtelemente 168 der Mediumkanal-Abschnitte 164 der Dichtungsanordnung 158 können einstückig mit dem ersten Dichtelement 172a des Strömungsfeld-Abschnitts 162 der Dichtungsanordnung 158 ausgebildet sein.

Die Dichtungsanordnung 158 kann somit zweiteilig ausgebildet sein, wobei ein erster Teil 192 der Dichtungsanordnung 158 das erste Dichtelement 172a des Strömungsfeld-Abschnitts 162 und die Dichtelemente 168 der Mediumkanal-Abschnitte 164 umfasst und vorzugsweise von der ersten Gasdiffusionslage 112 getragen ist und wobei ein zweiter Teil 194 der Dichtungsanordnung 158 das zweite Dichtelement 172b des Strömungsfeld-Abschnitts 162 umfasst und vorzugsweise von der zweiten Gasdiffusionslage 114 getragen ist.

Da die erste Lage 132 und die zweite Lage 134 der Bipolarplatte 108 im Bereich eines Verbindungskanals 121 (außerhalb von Abstützbereichen 196) voneinander beabstandet sind (siehe insbesondere die Fig. 2 und 3), weisen die Dichtelemente 172a, 172b in diesem Bereich des Strömungsfeld-Abschnitts 162 der Dichtungsanordnung 158 eine Gesamthöhe h auf, welche geringer ist als die Höhe h_{M} eines Dichtelements 168 im Mediumkanal-Abschnitt 164 der Dichtungsanordnung 158. Dabei entspricht die Gesamthöhe h der Summe der Einzelhöhen h1 und h2 der Dichtelemente 172a beziehungsweise 172b.

Wie insbesondere aus dem Längsschnitt durch den Strömungsfeld-Abschnitt 162 der Dichtungsanordnung 158 im Bereich der äußeren Dichtlinie 160a in Fig. 3 zu ersehen ist, variiert die Höhe h1, h2 der Dichtelemente 172a, 172b im fertig montierten Zustand der elektrochemischen Vorrichtung 100 längs der Längsrichtung 174 der Dichtungsanordnung 158, um so eine Variation des Abstands der Lagen 132, 134 der Bipolarplatte 108 von der Bezugsebene 154 auszugleichen.

Wie aus Fig. 4 zu ersehen ist, umfasst der Strömungsfeld-Abschnitt 162 der Dichtungsanordnung 158 einen Verbindungskanal-Bereich 176, in welchem der Strömungsfeld-Abschnitt 162 den Verbindungskanal 121 (beispielsweise den Verbindungskanal 142 für Brenngas) quert.

In diesem Verbindungskanal-Bereich 176 weisen die Dichtelemente 172a und 172b eine Gesamthöhe h_{V} auf.

Die einander abgewandten Außenseiten 178 der ersten Lage 132 und der zweiten Lage 134 der Bipolarplatte 108 weisen in dem Verbindungskanal-Bereich 176 (außerhalb der Abstützbereiche 196) jeweils einen Abstand H_{V1} beziehungsweise H_{V2} von der Bezugsebene 154 auf, welcher größer ist als die Dicke d der betreffenden Lage 132, 134.

Ferner umfasst der Strömungsfeld-Abschnitt 162 der Dichtungsanordnung 158 in der Längsrichtung 174 vor beziehungsweise hinter dem Verbindungskanal-Bereich 176 liegende Nachbarbereiche 180 der Dichtungsanordnung 158, in denen die Dichtelemente 172a, 172b die Gesamthöhe h_{N} aufweisen, welche größer ist als die Gesamthöhe h_{V} der Dichtelemente 172a, 172b in dem Verbindungskanal-Bereich 176.

Die Abstände H_{N1} und H_{N2} der Außenseiten 178 der ersten Lage 132 beziehungsweise der zweiten Lage 134 der Bipolarplatte 108 von der Bezugsebene 154 entsprechen in den Nachbarbereichen 180 der jeweiligen Materialstärke d der ersten Lage 132 beziehungsweise der zweiten Lage 134 der Bipolarplatte 108. Die Abstände H_{N1} und H_{N2} in den Nachbarbereichen 180 sind somit kleiner als die Abstände H_{V1} beziehungsweise H_{V2} im Verbindungskanal-Bereich 176.

Zwischen dem Verbindungskanal-Bereich 176 und jeweils einem Nachbarbereich 180 ist jeweils ein Übergangsbereich 182 der Dichtungsanordnung 158 angeordnet, in welchem die Gesamthöhe h_{U} der Dichtelemente 172a, 172b, vorzugsweise kontinuierlich, insbesondere im Wesentlichen linear, längs der Längsrichtung 174 von der Gesamthöhe h_{V} am Rande des Verbindungskanal-Bereichs 176 bis auf die Gesamthöhe h_{N} am Rande des benachbarten Nachbarbereichs 180 zunimmt.

Die Abstände H_{U1} und H_{U2} der Außenseiten 178 der ersten Lage 132 beziehungsweise der zweiten Lage 134 der Bipolarplatte 108 von der Bezugsebene 154 nehmen in den Übergangsbereichen 182, ausgehend von den Werten H_{V1} beziehungsweise H_{V2} am Rand des Verbindungskanal-Bereichs 176, vorzugsweise kontinuierlich, insbesondere im Wesentlichen linear, längs der Längsrichtung 174 ab bis zu den Werten H_{N1} beziehungsweise H_{N2} am Rand des jeweils benachbarten Nachbarbereichs 180.

In den Übergangsbereichen 182 bilden somit die Lagen 132 und 134 der Bipolarplatte 108 gegenüber der Bezugsebene 154 und gegenüber der Stapelrichtung 104 geneigte Rampen 184, welche die Dichtelemente 172a oder 172b abstützen.

Der mittlere Neigungswinkel α der dem jeweils zugeordneten Dichtelement 172a, 172b zugewandten Außenseite 178 der ersten Lage 132 und/oder der zweiten Lage 134 der Bipolarplatte 108 gegenüber der Bezugsebene 154 beträgt im Bereich der Rampen 184 vorzugsweise höchstens ungefähr 45°, insbesondere höchstens ungefähr 30°, besonders bevorzugt höchstens ungefähr 20°.

Die Summe aus der Gesamthöhe h der jeweiligen Dichtelemente 172a, 172b und der Abstände H₁ und H₂ der jeweils zugeordneten Lage 132 beziehungsweise 134 der Bipolarplatte 108 von der Bezugsebene 154 ist in dem Strömungsfeld-Abschnitt 162 längs der Längsrichtung 174 der Dichtungsanordnung 158 im Wesentlichen konstant (h_{N} + H_{N1} + H_{N2} = h_{U} + H_{U1} + H_{U2} = h_{V} + H_{V1} + H_{V2}).

Durch diese Ausgestaltung des Strömungsfeld-Abschnitts 162 der Dichtungsanordnung 158 wird einerseits erreicht, dass die Lagen 132 und 134 der Bipolarplatte 108 im Verbindungskanal-Bereich 176 einen ausreichenden Abstand voneinander aufweisen, um eine ausreichende Fluidströmung zwischen dem Mediumkanal 118 und dem Strömungsfeld 120 durch den Verbindungskanal 121 zu gewährleisten.

Andererseits wird erreicht, dass außerhalb des Verbindungskanal-Bereichs 176 die Höhe der Dichtelemente 172a, 172b möglichst groß ist, so dass diese Dichtelemente 172a, 172b dort eine möglichst große elastische Verformbarkeit aufweisen und auch große dynamische Dickenschwankungen im Betrieb der elektrochemischen Vorrichtung 100 ausgleichen können.

Ferner wird durch diese Ausgestaltung der Dichtungsanordnung 158 erreicht, dass die Dichtelemente 172a, 172b von in der Stapelrichtung 104 aufeinanderfolgenden elektrochemischen Einheiten 106 im Strömungsfeld-Abschnitt 172 der Dichtungsanordnung 158 einander - längs der Stapelrichtung 104 gesehen - zumindest teilweise und vorzugsweise vollständig überlappen können.

Vorzugsweise sind die Dichtelemente 172a und 172b von in der Stapelrichtung 104 aufeinanderfolgenden elektrochemischen Einheiten 106 im Wesentlichen deckungsgleich ausgebildet und angeordnet.

Die Gesamthöhe h_{N} der Dichtelemente 172a, 172b im Nachbarbereich 180 des Strömungsfeld-Abschnitts 162 der Dichtungsanordnung 158 kann im Wesentlichen gleich groß sein wie die Höhe h_{M} des Dichtelements 168 im Mediumkanal-Abschnitt 164 der Dichtungsanordnung 158.

Bei der in den Fig. 1 bis 3 dargestellten ersten Ausführungsform einer elektrochemischen Vorrichtung 100 bleibt der Abstand zwischen den beiden Lagen 132 und 134 der Bipolarplatte 108, welche den Verbindungskanal 121 begrenzen, im Verbindungskanal-Bereich 176 der Dichtungsanordnung 158 außerhalb der Abstützbereiche 196 auch dann erhalten, wenn die elektrochemischen Einheiten der elektrochemischen Vorrichtung 100 in der Stapelrichtung 104 gegeneinander verspannt werden, weil die Lagen 132 und 134 in den Abstützbereichen 196 zueinander vorspringen und sich an Abstützflächen 198 der Abstützbereiche 196 berühren und aneinander abstützen.

Die Abstützbereiche 196 können beispielsweise in Form von Näpfen oder Stegen ausgebildet sein.

Die Abstützbereiche 196 sind vorzugsweise einstückig mit jeweils einer der beiden abzustützenden Lagen 132 oder 134 ausgebildet und vorzugsweise durch einen Umformvorgang, insbesondere einen Präge- oder Tiefziehvorgang, an der jeweiligen Lage 132 oder 134 ausgebildet.

Das den Verbindungskanal 121 durchströmende Medium strömt vorzugsweise seitlich an den Abstützbereichen 196 vorbei.

Die Innenräume 200 der Abstützbereiche 196 liegen vorzugsweise außerhalb des Verbindungskanals 121.

Eine in Fig. 4 dargestellte zweite Ausführungsform einer elektrochemischen Vorrichtung 100 unterscheidet sich von der in den Fig. 1 bis 3 dargestellten Ausführungsform dadurch, dass die Lagen 132 und 134 der Bipolarplatte 108 im Bereich des Verbindungskanals 121 keine Abstützbereiche 196 aufweisen und dass im Zwischenraum zwischen den beiden Lagen 132 und 134 der Bipolarplatte 108 mindestens ein Stabilisierungselement 186 angeordnet ist.

Das Stabilisierungselement 186 stützt sich an einer oder mehr Abstützstellen 188 an der ersten Lage 132 der Bipolarplatte 108 und an einer oder mehr Abstützstellen 190 an der zweiten Lage 134 der Bipolarplatte 108 ab.

Das Stabilisierungselement 186 kann einen wellenförmigen Querschnitt aufweisen.

Das Stabilisierungselement 186 kann als ein separat von den Lagen 132 und 134 der Bipolarplatte 108 hergestelltes Teil ausgebildet sein und bei der Herstellung der Bipolarplatte 108 in den Zwischenraum zwischen den beiden Lagen 132 und 134 der Bipolarplatte 108 eingelegt sein.

Alternativ hierzu kann auch vorgesehen sein, dass das Stabilisierungselement 186 einstückig mit einer der beiden Lagen 132, 134 der Bipolarplatte 108 ausgebildet ist und durch einen Umformvorgang, beispielsweise durch einen Klappvorgang, bei der Herstellung der Bipolarplatte 108 in den Zwischenraum zwischen den beiden Lagen 132 und 134 der Bipolarplatte 108 eingebracht wird.

Das Stabilisierungselement 186 erhält den Abstand zwischen der ersten Lage 132 und der zweiten Lage 134 der Bipolarplatte 108 im Verbindungskanal-Bereich 176 auch dann aufrecht, wenn die Lagen 132, 134 der Bipolarplatte 108 mit einer Spannkraft beaufschlagt werden, welche deren Eigenstabilität übersteigt.

Im Übrigen stimmt die in Fig. 4 dargestellte zweite Ausführungsform einer elektrochemischen Vorrichtung hinsichtlich Aufbau, Funktion und Herstellungsweise mit der in den Fig. 1 bis 3 beschriebenen ersten Ausführungsform überein, auf deren vorstehende Beschreibung insoweit Bezug genommen wird.

Bei der in Fig. 5 dargestellten dritten Ausführungsform einer elektrochemischen Vorrichtung 100 bleibt der Abstand zwischen den beiden Lagen 132 und 134 der Bipolarplatte 108, welche den Verbindungskanal 121 begrenzen, im Verbindungskanal-Bereich 176 der Dichtungsanordnung 158 schon aufgrund der Eigenstabilität dieser Lagen 132, 134 auch dann erhalten, wenn die elektrochemischen Einheiten 106 der elektrochemischen Vorrichtung 100 in der Stapelrichtung 104 gegeneinander verspannt werden, so dass bei dieser Ausführungsform auf ein Stabilisierungselement 186 und auf in die Bipolarplatte 108 integrierte Abstützbereiche 196 verzichtet werden kann.

Eine in Fig. 6 dargestellte vierte Ausführungsform einer elektrochemischen Vorrichtung 100 unterscheidet sich von der in Fig. 5 dargestellten dritten Ausführungsform dadurch, dass im Strömungsfeld-Abschnitt 162 der Dichtungsanordnung 158 nur der Abstand H₁ oder H₂ einer der Lagen 132, 134 der Bipolarplatte 108, beispielsweise der Abstand H₁ der ersten Lage 132, von der Bezugsebene 154 in der Längsrichtung 174 der Dichtungsanordnung 158 variiert, wie dies vorstehend im Zusammenhang mit der ersten Ausführungsform beschrieben worden ist.

Die jeweils andere Lage 132, 134 der Bipolarplatte 108, also beispielsweise die zweite Lage 134, ist bei dieser Ausführungsform hingegen im Strömungsfeld-Abschnitt 162 im Wesentlichen eben ausgebildet, so dass der Abstand H₂ der Außenseite 178 der zweiten Lage 134 der Bipolarplatte 108 von der Bezugsebene 154 in dem Strömungsfeld-Abschnitt 162 überall im Wesentlichen gleich groß ist wie die Materialstärke d der zweiten Lage 134.

Zur Anpassung an diese Gestalt der zweiten Lage 134 der Bipolarplatte 108 weist auch das derselben zugeordnete zweite Dichtelement 172b im Strömungsfeld-Abschnitt 162 überall im Wesentlichen dieselbe Höhe h' auf, welche insbesondere der Höhe h_{N} des zweiten Dichtelements 172b in den Nachbarbereichen 180 bei der ersten Ausführungsform (siehe Fig. 3) entsprechen kann.

Im Übrigen stimmt die in Fig. 6 dargestellte vierte Ausführungsform einer elektrochemischen Vorrichtung 100 hinsichtlich Aufbau, Funktion und Herstellungsweise mit der in den Fig. 1 bis 3 dargestellten ersten Ausführungsform überein, auf deren vorstehende Beschreibung insoweit Bezug genommen wird.

Bei Varianten der vorstehend beschriebenen Ausführungsformen könnte vorgesehen sein, dass die Gesamthöhe h der Dichtelemente 172a, 172b in den verschiedenen Bereichen des Strömungsfeld-Abschnitts 162 der Dichtungsanordnung 158, insbesondere im Verbindungskanal-Bereich 176 und in den Nachbarbereichen 180, variiert, weil insbesondere im Bereich des Verbindungskanal-Bereichs 176 eine nicht ganz ebene, beispielsweise gewellte, Dichtfläche vorliegt.

In diesem Fall sind für h_{V} und h_{N} die über den jeweiligen Bereich, also insbesondere über den Verbindungskanal-Bereich 176 oder einen der Nachbarbereiche 180, gemittelten Werte anzusetzen. Entsprechendes gilt für die Abstände H₁ beziehungsweise H₂ der Außenseiten 178 der Lagen 132, 134 der Bipolarplatte 108 von der Bezugsebene 154.

## Patentansprüche

1. Elektrochemische Vorrichtung, umfassend einen Stapel aus mehreren, längs einer Stapelrichtung (104) aufeinanderfolgenden elektrochemischen Einheiten (106), die jeweils eine elektrochemisch aktive Membran-Elektroden-Anordnung (110), eine Bipolarplatte (108) und mindestens ein Dichtelement (172a, 172b) umfassen,
mindestens einen Mediumkanal (118), der sich längs der Stapelrichtung (104) durch mehrere der elektrochemischen Einheiten (106) hindurch erstreckt,
mindestens ein Strömungsfeld (120), durch welches ein Medium aus dem Mediumkanal (118) quer zu der Stapelrichtung (104) von dem Mediumkanal (118) zu einem anderen Mediumkanal (118) strömen kann, und
mindestens einen Verbindungskanal (121), durch welchen das Strömungsfeld (120) und der Mediumkanal (118) in Fluidverbindung miteinander stehen,
wobei die Dichtungsanordnung (158) einen Verbindungskanal-Bereich (176), in welchem die Dichtungsanordnung (158) den mindestens einen Verbindungskanal (121) quert, und mindestens einen in der Längsrichtung (174) der Dichtungsanordnung (158) vor oder hinter dem Verbindungskanal-Bereich (176) liegenden Nachbarbereich (180) umfasst, wobei die Dichtungsanordnung (158) in dem Verbindungskanal-Bereich (176) eine geringere mittlere Höhe (h) aufweist als in dem Nachbarbereich (180),
wobei mindestens ein Dichtelement (172a, 172b) der Dichtungsanordnung (158) in dem Verbindungskanal-Bereich (176) und in dem Nachbarbereich (180) mit der Bipolarplatte (108) in Kontakt steht, **dadurch gekennzeichnet,**
**dass** der mittlere Abstand (H) einer diesem Dichtelement (172a, 172b) zugewandten Außenseite (178) der Bipolarplatte (108) von einer senkrecht zur Stapelrichtung (104) ausgerichteten Bezugsebene (154) der Bipolarplatte (108) im Verbindungskanal-Bereich (176) größer ist als im Nachbarbereich (180).

2. Elektrochemische Vorrichtung nach Anspruch 1, **dadurch gekennzeichnet, dass** zwischen dem Verbindungskanal-Bereich (176) und dem Nachbarbereich (180) ein Übergangsbereich (182) angeordnet ist, in welchem die Höhe (h) der Dichtungsanordnung (158) von dem Nachbarbereich (180) ausgehend zu dem Verbindungskanal-Bereich (176) hin abnimmt.

3. Elektrochemische Vorrichtung nach einem der Ansprüche 1 oder 2, **dadurch gekennzeichnet, dass** die dem Dichtelement (172a, 172b) zugewandte Außenseite (178) der Bipolarplatte (108) in einem zwischen dem Verbindungskanal-Bereich (176) und dem Nachbarbereich (180) angeordneten Übergangsbereich (182) gegenüber der Bezugsebene (154) der Bipolarplatte (108) geneigt ist.

4. Elektrochemische Vorrichtung nach Anspruch 3, **dadurch gekennzeichnet, dass** der mittlere Neigungswinkel (α) der dem Dichtelement (172a, 172b) zugewandten Außenseite (178) der Bipolarplatte (108) gegenüber der Bezugsebene (154) in dem Übergangsbereich (182) höchstens ungefähr 45° beträgt.

5. Elektrochemische Vorrichtung nach einem der Ansprüche 1 bis 4, **dadurch gekennzeichnet, dass** die Summe aus der mittleren Höhe (h) der Dichtungsanordnung (158) und den mittleren Abständen (H₁, H₂) der der Bezugsebene (154) abgewandten Außenseiten (178) der Bipolarplatte (108) von der Bezugsebene (154) in dem Verbindungskanal-Bereich (176) und in dem Nachbarbereich (180) im Wesentlichen gleich groß ist.

6. Elektrochemische Vorrichtung nach einem der Ansprüche 1 bis 5, **dadurch gekennzeichnet, dass** mindestens eine der elektrochemischen Einheiten (106) eine Dichtungsanordnung (158) mit zwei Dichtelementen (172a, 172b) umfasst, die zusammen einen Abstand zwischen der Bipolarplatte (108) der elektrochemischen Einheit (106) und einer Bipolarplatte (108') einer benachbarten elektrochemischen Einheit (106) längs der Stapelrichtung (104) überbrücken.

7. Elektrochemische Vorrichtung nach Anspruch 6, **dadurch gekennzeichnet, dass** die Dichtelemente (172a, 172b) derart ausgebildet und angeordnet sind, dass sie - längs der Stapelrichtung (104) gesehen - einander zumindest teilweise überlappen.

8. Elektrochemische Vorrichtung nach einem der Ansprüche 1 bis 7, **dadurch gekennzeichnet, dass** die Bipolarplatte (108) zwei Teile (126, 128) umfasst, die im Verbindungskanal-Bereich (176) zumindest abschnittsweise voneinander beabstandet sind.

9. Elektrochemische Vorrichtung nach Anspruch 8, **dadurch gekennzeichnet, dass** der mittlere Abstand (H₁, H₂) der der Bezugsebene (154) der Bipolarplatte (108) abgewandten Außenseite (178) der Bipolarplatte (108) von der Bezugsebene (154) der Bipolarplatte (108) bei beiden Teilen (126, 128) der Bipolarplatte (108) in dem Verbindungskanal-Bereich (176) größer ist als in dem Nachbarbereich (180).

10. Elektrochemische Vorrichtung nach Anspruch 8, **dadurch gekennzeichnet, dass** der mittlere Abstand (H₁, H₂) der der Bezugsebene (154) der Bipolarplatte (108) abgewandten Außenseite (178) der Bipolarplatte (108) von der Bezugsebene (154) der Bipolarplatte (108) bei einem der Teile (126, 128) der Bipolarplatte (108) in dem Verbindungskanal-Bereich (176) im Wesentlichen gleich groß ist wie in dem Nachbarbereich (180).

11. Elektrochemische Vorrichtung nach einem der Ansprüche 8 bis 10, **dadurch gekennzeichnet, dass** mindestens einer der Teile (126, 128) der Bipolarplatte (108) mit einem oder mehreren Abstützbereichen (196) versehen ist, mit welchen dieser Teil (126, 128) der Bipolarplatte sich im Verbindungskanal-Bereich (176) an dem jeweils anderen Teil (128, 126) abstützt.

12. Elektrochemische Vorrichtung nach einem der Ansprüche 8 bis 11, **dadurch gekennzeichnet, dass** im Zwischenraum zwischen den zwei Teilen (126, 128) der Bipolarplatte (108) mindestens ein Stabilisierungselement (186) angeordnet ist.

13. Elektrochemische Vorrichtung nach Anspruch 12, **dadurch gekennzeichnet, dass** das Stabilisierungselement (186) einstückig mit einem der Teile (126, 128) der Bipolarplatte (108) ausgebildet ist.

14. Elektrochemische Vorrichtung nach einem der Ansprüche 1 bis 13, **dadurch gekennzeichnet, dass** mindestens ein Dichtelement (172a, 172b) der Dichtungsanordnung (158) an der Membran-Elektrolyt-Anordnung (110) der jeweiligen elektrochemischen Einheit (106) festgelegt ist.

15. Elektrochemische Vorrichtung nach einem der Ansprüche 1 bis 14, **dadurch gekennzeichnet, dass** mindestens ein Dichtelement (172a, 172b) der Dichtungsanordnung (158) ein Elastomermaterial umfasst.

## Claims

1. Electro-chemical device, comprising
a stack consisting of a plurality of electro-chemical units (106) which succeed one another along a stacking direction (104) and which each comprise an electro-chemically active membrane electrode arrangement (110), a bipolar plate (108) and at least one sealing element (172a, 172b),
at least one medium channel (118) which extends along the stacking direction (104) through a plurality of the electro-chemical units (106),
at least one flow field (120) through which a medium out of the medium channel (118) can flow transversely with respect to the stacking direction (104) from the medium channel (118) to another medium channel (118), and
at least one connection channel (121) through which the flow field (120) and the medium channel (118) are in fluid connection with one another,
wherein the sealing arrangement (158) comprises a connection channel region (176) in which the sealing arrangement (158) crosses the at least one connection channel (121), and at least one neighbouring region (180) which is located in front of or behind the connection channel region (176) in the longitudinal direction (174) of the sealing arrangement (158), wherein the average height (h) of the sealing arrangement (158) in the connection channel region (176) is lower than in the neighbouring region (180), wherein
at least one sealing element (172a, 172b) of the sealing arrangement (158) is in contact with the bipolar plate (108) in the connection channel region (176) and in the neighbouring region (180),
**characterised in that**
the average spacing (H) of an outer surface (178) of the bipolar plate (108) facing this sealing element (172a, 172b) from a reference plane (154) of the bipolar plate (108) that is oriented perpendicularly with respect to the stacking direction (104) is larger in the connection channel region (176) than in the neighbouring region (180).

2. An electro-chemical device in accordance with Claim 1, **characterized in that** there is arranged, between the connection channel region (176) and the neighbouring region (180), a transition region (182), in which the height (h) of the sealing arrangement (158) decreases commencing from the neighbouring region (180) to the connection channel region (176).

3. An electro-chemical device in accordance with either of the Claims 1 or 2, **characterized in that** the outer surface (178) of the bipolar plate (108) facing the sealing element (172a, 172b) is inclined with respect to the reference plane (154) of the bipolar plate (108) in a transition region (182) that is arranged between the connection channel region (176) and the neighbouring region (180).

4. An electro-chemical device in accordance with Claim 3, **characterized in that** the average angle of inclination (α) of the outer surface (178) of the bipolar plate (108) facing the sealing element (172a, 172b) with respect to the reference plane (154) amounts to at most approximately 45° in the transition region (182).

5. An electro-chemical device in accordance with any of the Claims 1 to 4, **characterized in that** the sum of the average height (h) of the sealing arrangement (158) and the average spacings (H₁, H₂) from the reference plane (154) of the outer surfaces (178) of the bipolar plate (108) remote from the reference plane (154) is of substantially the same size in the connection channel region (176) and in the neighbouring region (180).

6. An electro-chemical device in accordance with any of the Claims 1 to 5, **characterized in that** at least one of the electro-chemical units (106) comprises a sealing arrangement (158) having two sealing elements (172a, 172b) which together bridge a spacing between the bipolar plate (108) of the electro-chemical unit (106) and a bipolar plate (108') of a neighbouring electro-chemical unit (106) along the stacking direction (104).

7. An electro-chemical device in accordance with Claim 6, **characterized in that** the sealing elements (172a, 172b) are formed and arranged in such a manner that they at least partly overlap one another - as viewed along the stacking direction (104).

8. An electro-chemical device in accordance with any of the Claims 1 to 7, **characterized in that** the bipolar plate (108) comprises two parts (126, 128) which are spaced from each other, at least in sections, in the connection channel region (176).

9. An electro-chemical device in accordance with Claim 8, **characterized in that** the average spacing (H₁, H₂) from the reference plane (154) of the bipolar plate (108) of the outer surface (178) of the bipolar plate (108) remote from the reference plane (154) of the bipolar plate (108) is larger in the connection channel region (176) than in the neighbouring region (180) in the case of both parts (126, 128) of the bipolar plate (108).

10. An electro-chemical device in accordance with Claim 8, **characterized in that** the average spacing (H₁, H₂) from the reference plane (154) of the bipolar plate (108) of the outer surface (178) of the bipolar plate (108) remote from of the reference plane (154) of the bipolar plate (108) is of substantially the same size in the connection channel region (176) as in the neighbouring region (180) in the case of one of the parts (126, 128) of the bipolar plate (108).

11. An electro-chemical device in accordance with any of the Claims 8 to 10, **characterized in that** at least one of the parts (126,128) of the bipolar plate (108) is provided with one or more supporting regions (196) with which this part (126, 128) of the bipolar plate is supported on the respective other part (128, 126) in the connection channel region (176).

12. An electro-chemical device in accordance with any of the Claims 8 to 11, **characterized in that** at least one stabilising element (186) is arranged in the gap between the two parts (126, 128) of the bipolar plate (108).

13. An electro-chemical device in accordance with Claim 12, **characterized in that** the stabilising element (186) is formed in one piece with one of the parts (126, 128) of the bipolar plate (108).

14. An electro-chemical device in accordance with any of the Claims 1 to 13, **characterized in that** at least one sealing element (172a, 172b) of the sealing arrangement (158) is fixed to the membrane electrolyte arrangement (110) of the respective electro-chemical unit (106).

15. An electro-chemical device in accordance with any of the Claims 1 to 14, **characterized in that** at least one sealing element (172a, 172b) of the sealing arrangement (158) comprises an elastomeric material.

## Revendications

1. Dispositif électrochimique, comprenant une pile de plusieurs unités électrochimiques (106) successives le long d'une direction (104) de la pile, lesquelles unités comprennent une disposition d'électrodes à membrane (110) électrochimiquement actives, une plaque bipolaire (108) et au moins un élément d'étanchéité (172a, 172b),
au moins un canal à fluide (118) qui traverse plusieurs unités électrochimiques (106) le long de la direction (104) de la pile,
au moins un champ d'écoulement (120) à travers lequel un fluide du canal à fluide (118) peut s'écouler depuis le canal à fluide (118) transversalement à la direction (104) de la pile vers un autre canal à fluide (118), et
au moins un canal de liaison (121) grâce auquel le champ d'écoulement (120) et le canal à fluide (118) sont en liaison fluidique l'un avec l'autre,
le dispositif d'étanchéité (158) comportant une zone de canal de liaison (176), dans laquelle le dispositif d'étanchéité (158) croise l'au moins un canal de liaison (121), et au moins une zone voisine (180) située dans le sens longitudinal (174) du dispositif d'étanchéité (158) devant ou derrière la zone de canal de liaison (176), le dispositif d'étanchéité (158) présentant, dans la zone du canal de liaison (176), une hauteur moyenne (h) plus petite que dans la zone voisine (180),
au moins un élément d'étanchéité (172a, 172b) du dispositif d'étanchéité (158) étant en contact avec la plaque bipolaire (108) dans la zone du canal de liaison (176) et dans la zone voisine (180), **caractérisé en ce que** la distance moyenne (H) d'un côté extérieur (178), dirigé vers cet élément d'étanchéité (172a, 172b), de la plaque bipolaire (108) d'un plan de référence (154), perpendiculaire à la direction (104) de la pile, de la plaque bipolaire (108) dans la zone du canal de liaison (176) est plus grande que dans la zone voisine (180).

2. Dispositif électrochimique selon la revendication 1, **caractérisé en ce que**, entre la zone du canal de liaison (176) et la zone voisine (180) se trouve une zone intermédiaire (182) dans laquelle la hauteur (h) du dispositif d'étanchéité (158) diminue depuis la zone voisine (180) vers la zone du canal de liaison (176).

3. Dispositif électrochimique selon l'une quelconque des revendications 1 ou 2, **caractérisé en ce que** le côté extérieur (178), dirigé vers l'élément d'étanchéité (172a, 172b), de la plaque bipolaire (108) est incliné, dans une zone intermédiaire (182) disposée entre la zone du canal de liaison (176) et la zone voisine (180), par rapport à la zone de référence (154) de la plaque bipolaire (108).

4. Dispositif électrochimique selon la revendication 3, **caractérisé en ce que** l'angle d'inclinaison moyen (α) du côté extérieur (178), dirigé vers l'élément d'étanchéité (172a, 172b), de la plaque bipolaire (108), est au maximum d'environ 45° par rapport au plan de référence (154) dans la zone intermédiaire (182).

5. Dispositif électrochimique selon l'une quelconque des revendications 1 à 4, **caractérisé en ce que** la somme de la hauteur moyenne (h) du dispositif d'étanchéité (158) et des distances moyennes (H₁, H₂) des côtés extérieurs (178), opposés au plan de référence (154), de la plaque bipolaire (108) du plan de référence (154) est essentiellement identique dans la zone du canal de liaison (176) et dans la zone voisine (180).

6. Dispositif électrochimique selon l'une quelconque des revendications 1 à 5, **caractérisé en ce qu'**au moins l'une des unités électrochimiques (106) comprend un dispositif d'étanchéité (158) avec deux éléments d'étanchéité (172a, 172b) qui comblent ensemble une distance entre la plaque bipolaire (108) de l'unité électrochimique (106) et une plaque bipolaire (108') d'une unité électrochimique (106) voisine le long de la direction (104) de la pile.

7. Dispositif électrochimique selon la revendication 6, **caractérisé en ce que** les éléments d'étanchéité (172a, 172b) sont conçus et disposés de manière à se chevaucher, du moins en partie, le long de la direction (104) de la pile.

8. Dispositif électrochimique selon l'une quelconque des revendications 1 à 7, **caractérisé en ce que** la plaque bipolaire (108) comprend deux parties (126, 128) à distance l'une de l'autre, du moins sur certains tronçons, dans la zone du canal de liaison (176).

9. Dispositif électrochimique selon la revendication 8, **caractérisé en ce que** la distance moyenne (H₁, H₂) du côté extérieur (178), opposé au plan de référence (154) de la plaque bipolaire (108), de la plaque bipolaire (108) par rapport au plan de référence (154) de la plaque bipolaire (108) sur les deux parties (126, 128) de la plaque bipolaire (108) est plus grande dans la zone du canal de liaison (176) que dans la zone voisine (180).

10. Dispositif électrochimique selon la revendication 8, **caractérisé en ce que** la distance moyenne (H₁, H₂) du côté extérieur (178), opposé au plan de référence (154) de la plaque bipolaire (108), de la plaque bipolaire (108) par rapport au plan de référence (154) de la plaque bipolaire (108) sur l'une des parties (126, 128) de la plaque bipolaire (108) est essentiellement la même dans la zone du canal de liaison (176) que dans la zone voisine (180).

11. Dispositif électrochimique selon l'une quelconque des revendications 8 à 10, **caractérisé en ce qu'**au moins l'une des parties (126, 128) de la plaque bipolaire (108) est dotée d'une ou plusieurs zones d'appui (196) permettant à cette partie (126, 128) de la plaque bipolaire d'appuyer contre l'autre partie (126, 128) dans la zone du canal de liaison (176).

12. Dispositif électrochimique selon l'une quelconque des revendications 8 à 11, **caractérisé en ce que** dans l'espace intermédiaire entre les deux parties (126, 128) de la plaque bipolaire (108) est disposé au moins un élément de stabilisation (186).

13. Dispositif électrochimique selon la revendication 12, **caractérisé en ce que** l'élément de stabilisation (186) forme une seule pièce avec l'une des parties (126, 128) de la plaque bipolaire (108).

14. Dispositif électrochimique selon l'une quelconque des revendications 1 à 13, **caractérisé en ce qu'**au moins un élément d'étanchéité (172a, 172b) du dispositif d'étanchéité (158) est fixé sur le dispositif à électrolyte à membrane (110) de l'unité électrochimique (106) respective.

15. Dispositif électrochimique selon l'une quelconque des revendications 1 à 14, **caractérisé en ce qu'**au moins un élément d'étanchéité (172a, 172b) du dispositif d'étanchéité (158) comprend un matériau élastomère.
